(19) Europäisches Patentamt
European Patent Office
Office européen des brevets

(11) **EP 4 682 966 A1**

(12) **EUROPEAN PATENT APPLICATION**

(43) Date of publication:
**21.01.2026 Bulletin 2026/04**

(21) Application number: **25189974.6**

(22) Date of filing: **16.07.2025**

(51) International Patent Classification (IPC):
*H01M 4/04* (2006.01)     *H01M 4/13* (2010.01)
*H01M 4/139* (2010.01)     *H01M 4/66* (2006.01)
*H01M 4/02* (2006.01)

(52) Cooperative Patent Classification (CPC):
**H01M 4/139; H01M 4/0402; H01M 4/0404;
H01M 4/0435; H01M 4/0471; H01M 4/13;
H01M 4/661; H01M 4/667;** H01M 2004/021

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **19.07.2024 KR 20240095930**

(71) Applicant: **SAMSUNG SDI CO., LTD.
Yongin-si, Gyeonggi-do 17084 (KR)**

(72) Inventor: **KIM, Hyunwoo
17084 Yongin-Si (KR)**

(74) Representative: **Marks & Clerk LLP
15 Fetter Lane
London EC4A 1BW (GB)**

(54) **DRY ELECTRODE AND MANUFACTURING METHOD THEREOF**

(57)     A dry electrode and a method of forming the dry electrode are provided. The dry electrode includes: a first composite layer including an active material; and a substrate layer on at least a first surface of the first composite layer. The method of manufacturing the dry electrode includes: dry-forming a first composite layer including an active material; and depositing a substrate layer on at least a first surface of the first composite layer.

FIG. 2

**Description**

**BACKGROUND**

**1. Field**

Aspects of embodiments of the present disclosure relate to a dry electrode, and a manufacturing method of the dry electrode.

**2. Description of the Related Art**

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

In wet electrodes, rolling during a manufacturing process increases adhesion by pressing an active material against a substrate. On the other hand, dry electrodes, which use no solvents unlike wet electrodes, are attracting attention as a next-generation electrode that enables environmentally friendly manufacturing and cost reductions.

The above information disclosed in this Background section is for enhancement of understanding of the background of the present disclosure, and therefore, it may contain information that does not constitute related (or prior) art.

**SUMMARY**

In the manufacturing of dry electrodes, unlike that in wet electrodes, the compound may be completed in the form of a film, which may be further rolled with the substrate to complete the electrode. In this case, poor adhesion between the substrate and the compound may occur.

One or more embodiments of the present disclosure may be directed to a dry electrode in which an adhesion between a substrate and a compound may be improved, and a manufacturing method of the dry electrode.

However, the technical problem to be solved by the present disclosure is not limited to the above problem, and other problems not mentioned herein, and aspects and features of the present disclosure that would address such problems, will be clearly understood by those skilled in the art from the description of the present disclosure below.

According to one or more embodiments of the present disclosure, a dry electrode includes: a first composite layer including an active material; and a substrate layer on at least a first surface of the first composite layer.

In an embodiment, the substrate layer may have a thickness of 1 $\mu$m to 2 $\mu$m.

In an embodiment, the substrate layer may include aluminium (Al) or copper (Cu).

In an embodiment, the dry electrode may further include a second composite layer on a second surface of the substrate layer opposite to a first surface of the substrate layer facing the first composite layer.

In an embodiment, the first composite layer and the second composite layer may include different active materials from each other.

In an embodiment, the second composite layer may be joined to the substrate layer by being rolled together with the first composite layer and the substrate layer.

In an embodiment, the substrate layer may include a material deposited by at least one of physical vapor deposition (PVD), chemical vapor deposition (CVD), sputtering, electron beam (E-beam) processing, evaporation, atomic layer deposition (ALD), arc discharge, or thermal evaporation.

In an embodiment, the first composite layer may include voids, and some of the voids may be filled with the substrate layer.

In an embodiment, the first composite layer may have a porosity of 30% or less.

In an embodiment, the dry electrode may further include an electrode tab, and the electrode tab may be on a second surface of the substrate layer opposite to a first surface of the substrate layer facing the first composite layer.

In an embodiment, the dry electrode may further include an electrode tab, the electrode tab may be on the first composite layer, and the substrate layer may cover the electrode tab on the first composite layer.

According to one or more embodiments of the present disclosure, a method of manufacturing a dry electrode includes: dry-forming a first composite layer including an active material; and depositing a substrate layer on at least a first surface of the first composite layer.

2

In an embodiment, the depositing of the substrate layer may include depositing a material of the substrate layer to a thickness of 1 $\mu$m to 2 $\mu$m.

In an embodiment, the substrate layer may include aluminium (Al) or copper (Cu).

In an embodiment, after the depositing of the substrate layer, the method may further include forming a second composite layer on the substrate layer, the second composite layer including an active material different from that of the first composite layer.

In an embodiment, the forming of the second composite layer may include: disposing the second composite layer on a second surface of the substrate layer opposite to a first surface of the substrate layer facing the first composite layer; and rolling the first composite layer, the substrate layer, and the second composite layer together to join the second composite layer to the substrate layer.

In an embodiment, the depositing of the substrate layer may include depositing the substrate layer by at least one of physical vapor deposition (PVD), chemical vapor deposition (CVD), sputtering, electron beam (E-beam) processing, evaporation, atomic layer deposition (ALD), arc discharge, or thermal evaporation.

In an embodiment, the first composite layer may have a porosity of 30% or less after the substrate layer is deposited.

In an embodiment, after the depositing of the substrate layer, the method may further include disposing an electrode tab on a second surface of the substrate layer opposite a first surface of the substrate layer facing the first composite layer.

In an embodiment, after the dry-forming of the first composite layer, the method may further include disposing an electrode tab on the first surface of the first composite layer. The depositing of the substrate layer may include depositing the substrate layer on the first surface of the first composite layer to cover the electrode tab on the first surface of the first composite layer.

At least some of the above and other features of the invention are set out in the claims.

However, aspects and features of the present disclosure are not limited to those described above, and other aspects and features not mentioned will be clearly understood by a person skilled in the art from the detailed description, described below.

## BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.

FIG. 1 illustrates a cross-sectional view showing an example of a dry electrode according to some embodiments of the present disclosure.

FIG. 2 illustrates a cross-sectional view showing an example of a process of forming a substrate layer by deposition in the dry electrode according to some embodiments of the present disclosure.

FIG. 3 illustrates a cross-sectional view showing an example of a dry electrode in which a second composite layer is formed according to some embodiments of the present disclosure.

FIG. 4 illustrates a cross-sectional view showing an example in which an electrode tab is attached to a dry electrode according to some embodiments of the present disclosure.

FIG. 5 illustrates a cross-sectional view showing another example in which an electrode tab is attached to a dry electrode according to some embodiments of the present disclosure.

FIG. 6 illustrates a cross-sectional view showing an example of an electrode assembly according to some embodiments of the present disclosure.

FIG. 7 illustrates cross-sections of a dry negative electrode and a dry positive electrode, respectively, according to some embodiments of the present disclosure.

FIG. 8 illustrates a cross-section of a double-sided electrode formed by rolling the dry negative electrode and the dry positive electrode of FIG. 7 while in contact with each other.

FIG. 9 illustrates a cross-section of an electrode assembly formed by stacking the double-sided electrodes formed in FIG. 8.

FIG. 10 illustrates a flowchart of a method of manufacturing a dry electrode according to some embodiments of the present disclosure.

FIG. 11 illustrates a flowchart of a method of forming a second composite layer on the dry electrode in the method of manufacturing a dry electrode according to some embodiments of the present disclosure.

## DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified. The terms used herein are intended to describe embodiments of the present disclosure and are not intended to limit the present disclosure.

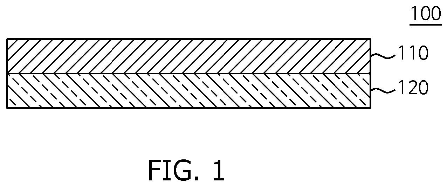

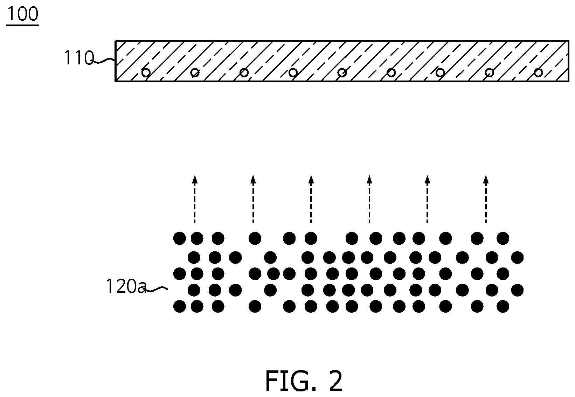

FIG. 1 illustrates a cross-sectional view showing an example of a dry electrode according to some embodiments of the present disclosure. FIG. 2 illustrates a cross-sectional view showing an example of a process of forming a substrate layer by deposition in the dry electrode according to some embodiments of the present disclosure.

Referring to FIGS. 1 and 2, a dry electrode 100 according to some embodiments of the present disclosure includes a first composite layer 110 and a substrate layer 120.

The first composite layer 110 includes an active material. As an example, the first composite layer 110 may be dry-formed in the form of a film including an active material and a binder. The active material may be a positive electrode active material or a negative electrode active material.

The positive electrode active material may include a compound (lithiated intercalation compound) that is capable of intercalating and deintercalating lithium. Specifically, at least one of a composite oxide of lithium and a metal selected from cobalt, manganese, nickel, and combinations thereof may be used.

The composite oxide may be a lithium transition metal composite oxide. Specific examples of the composite oxide may include lithium nickel-based oxide, lithium cobalt-based oxide, lithium manganese-based oxide, lithium iron phosphate-based compound, cobalt-free nickel-manganese-based oxide, or a combination thereof.

As an example, the following compounds represented by any one of the following Chemical Formulas may be used. $Li_aA_{1-b}X_bO_{2-c}D_c$ ($0.90 \leq a \leq 1.8$, $0 \leq b \leq 0.5$, and $0 \leq c \leq 0.05$); $Li_aMn_{2-b}X_bO_{4-c}D_c$ ($0.90 \leq a \leq 1.8$, $0 \leq b \leq 0.5$, and $0 \leq c \leq 0.05$); $Li_aNi_{1-b-c}CO_bX_cO_{2-\alpha}D_\alpha$ ($0.90 \leq a \leq 1.8$, $0 \leq b \leq 0.5$, $0 \leq c \leq 0.5$, and $0 < \alpha < 2$); $Li_aNi_{1-b-c}Mn_bX_cO_{2-\alpha}D_\alpha$ ($0.90 \leq a \leq 1.8$, $0 \leq b \leq 0.5$, $0 \leq c \leq 0.5$, and $0 < \alpha < 2$); $Li_aNi_bCo_cL^1_dG_eO_2$ ($0.90 \leq a \leq 1.8$, $0 \leq b \leq 0.9$, $0 \leq c \leq 0.5$, $0 \leq d \leq 0.5$, and $0 \leq e \leq 0.1$); $Li_aNiG_bO_2$ ($0.90 \leq a \leq 1.8$ and $0.001 \leq b \leq 0.1$); $Li_aCoG_bO_2$ ($0.90 \leq a \leq 1.8$ and $0.001 \leq b \leq 0.1$); $Li_aMn_{1-b}G_bO_2$ ($0.90 \leq a \leq 1.8$ and $0.001 \leq b \leq 0.1$); $Li_aMn_2G_bO_4$ ($0.90 \leq a \leq 1.8$ and $0.001 \leq b \leq 0.1$); $Li_aMn_{1-g}G_gPO_4$ ($0.90 \leq a \leq 1.8$ and $0 \leq g \leq 0.5$); $Li_{(3-f)}Fe_2(PO_4)_3$ ($0 \leq f \leq 2$); or $Li_aFePO_4$ ($0.90 \leq a \leq 1.8$).

In the above Chemical Formulas, A is Ni, Co, Mn, or a combination thereof; X is Al, Ni, Co, Mn, Cr, Fe, Mg, Sr, V, a rare earth element or a combination thereof; D is O, F, S, P, or a combination thereof; G is Al, Cr, Mn, Fe, Mg, La, Ce, Sr, V, or a combination thereof; and $L^1$ is Mn, Al, or a combination thereof.

The positive electrode active material may be, for example, a high nickel-based positive electrode active material having a nickel content of greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The high-nickel-based positive electrode active material may be capable of realizing high capacity and can be applied to a high-capacity, high-density rechargeable lithium battery.

The negative electrode active material may include a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example. crystalline carbon, amorphous carbon or a combination thereof. The crystalline carbon may be graphite such as non-shaped, sheet-shaped, flake-shaped, sphere-shaped, or fiber-shaped natural graphite or artificial graphite. The amorphous carbon may be a soft carbon, a hard carbon, a mesophase pitch carbonization product, calcined coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, SiOx ($0 < x \leq 2$), a Si-Q alloy (where Q is selected from an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include Sn, $SnO_2$, a Sn-based

alloy, or a combination thereof.

The silicon-carbon composite may be a composite of silicon and amorphous carbon. According to an embodiment, the silicon-carbon composite may be in a form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may exist dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core.

The Si-based negative electrode active material or the Sn-based negative electrode active material may be used in combination with a carbon-based negative electrode active material.

The first composite layer 110 is formed by a dry process. As used herein, a dry process or a dry electrode refers to a process or an electrode that does not include a solvent, or that does not intentionally use a solvent during the electrode manufacturing process. The solvent includes a process solvent, a process solvent residue, process solvent impurities, and the like. As an example, the first composite layer 110 may be formed in the form of a dry film including a dry active material and a dry binder. The dry binder may be, for example, a binder that is not impregnated, dissolved, or dispersed in a solvent. The dry binder may be, for example, a binder that does not include or come into contact with a solvent.

The dry binder includes, for example, a fibrillated binder. The fibrillated binder may act as a matrix to support and bind the dry active material and/or other components included in the first composite layer 110. The fibrillated binder may have a fibrous morphology, for example, such as in a scanning electron microscopy image of the first composite layer 110. The fibrillated binder may have an aspect ratio of, for example, 10 or greater, 20 or greater, 50 or greater, or 100 or greater. The dry binder may include (e.g., may be), but is not necessarily limited to, for example, polytetrafluoroethylene (PTFE), polyvinylidene fluoride-hexapropylene (PVDF-HFP) copolymer, polyvinylidene fluoride (PVDF), polyvinyl alcohol, polyacrylonitrile, carboxymethyl cellulose (CMC), starch, hydroxypropyl cellulose, cellulose, polyvinylpyrrolidone, polyethylene, polypropylene, ethylene-propylene-diene polymer (EPDM), sulfonated-EPDM, styrene butadiene rubber (SBR), fluororubber, or a copolymer thereof, and may be any suitable binder used in the manufacturing of the dry film. The dry binder may include a fluorinated binder. The fluorinated binder may include (e.g., may be), for example, polytetrafluoroethylene (PTFE), polyvinylidene fluoride-hexapropylene (PVDF-HFP) copolymer, or polyvinylidene fluoride (PVDF). The content of the dry binder included in the first composite layer 110 may be, for example, from 0.5 wt% to 10 wt%, or from 1 wt% to 5 wt%, based on the total weight of the first composite layer 110. Because the first composite layer 110 may include the dry binder in the above-described range, a cohesion between the first composite layer 110 and the substrate layer 120 may be improved, and the dry electrode including the first composite layer 110 may maintain or substantially maintain a high energy density.

The first composite layer 110 may further include, for example, a dry coating material. The dry coating material is, for example, a coating material that is not impregnated, dissolved, or dispersed in a solvent. The dry coating material is, for example, a coating material that does not include or come into contact with a solvent. The dry coating material is, for example, a carbon-based coating material, a metal-based coating material, or a suitable combination thereof. The dry coating material includes, for example, a carbon-based conductive material. The carbon-based conductive material may be any suitable material selected from, but is not limited to, carbon black, graphite particulates, natural graphite, artificial graphite, acetylene black, Ketjen black, carbon fiber, carbon nanotubes, or the like, which may be used as a carbon-based conductive material as known by those having ordinary skill in the art. The content of the dry conductive material included in the first composite layer 110 is, for example, from 0.5 wt% to 10 wt% or from 1 wt% to 5 wt%, based on the total weight of the first composite layer 110. Because the first composite layer 110 may include the dry coating material in the above-described range, the conductivity of the first composite layer 110 may be improved, and a high energy density of the first composite layer 110 may be maintained or substantially maintained. The dry coating material may be, for example, a porous coating material. Because of the porosity of the dry coating material, the interior of the first composite layer 110 including the porous dry coating material may be more easily impregnated with an electrolyte. Accordingly, an internal resistance of the lithium battery including the first composite layer 110 may be reduced.

Because the first composite layer 110 is manufactured by a dry process, the first composite layer 110 does not include any intentionally added processing solvent. The first composite layer 110 does not include, for example, a residual processing solvent. A trace amount of an unintended solvent may remain in the first composite layer 110, but such a solvent is not the intentionally added processing solvent. The first composite layer 110 is different from a wet electrode film, which is manufactured by mixing electrode components and a processing solvent to prepare an electrode slurry, and then drying the electrode slurry to remove some or all of the processing solvent.

The substrate layer 120 is formed by deposition on at least one surface of the first composite layer 110. The substrate layer 120 may include aluminium (Al) or copper (Cu). However, the material of the substrate layer 120 is not limited thereto.

For example, in a case where the first composite layer 110 includes a negative electrode active material, the substrate layer 120 may include copper (Cu). In a case where the first composite layer 110 includes a positive electrode active material, the substrate layer 120 may include aluminium (Al).

The substrate layer 120 may be formed to a thickness of 1 $\mu$m to 2 $\mu$m. For example, the surface of the first composite layer 110 may be coated with the substrate layer 120 by placing a metal to be deposited in an electric furnace and evaporating the metal. Because the vapor is generated by applying a current to the electric furnace, the form and amount of deposition may vary depending on the value of the current. In an example, the thickness of the substrate layer 120 may be adjustable by operating at 50 A to 300 A and 1 m/min to 10 m/min based on a 400 mm $\times$ 50 mm furnace.

The substrate layer 120 may be deposited by one or more suitable methods selected from the group including (e.g., consisting of) physical vapor deposition (PVD) or chemical vapor deposition (CVD), including sputtering, electron beam (E-beam) processing, evaporation, atomic layer deposition (ALD), arc discharge, and/or thermal evaporation. FIG. 2 illustrates, for example, a process of depositing a metallic hygroscopic material 120a to form the substrate layer 120 by chemical vapor deposition (CVD). The first composite layer 110 formed by the dry process may have voids. Some of the voids in the first composite layer 110 may be filled with the metallic hygroscopic material 120a, and the first composite layer 110 may have a void rate (e.g. porosity) of 30% or less. In the process of depositing the substrate layer 120 on the first composite layer 110, the metallic hygroscopic material 120a may fill the voids of the first composite layer 110, and may cover a surface of the first composite layer 110, thereby improving the adhesion. In addition, an electrical conductivity may be improved by filling the metallic hygroscopic material 120a between the active material of the first composite layer 110. The porosity of the first composite layer as described herein may be determined by the mercury intrusion porosimetry (MIP) method. In this method, mercury is injected into the first composite layer under controlled pressure, and the volume of mercury intruded is measured to calculate the porosity. The measurement is conducted at room temperature (about 25 °C), and the pressure is increased gradually up to 60,000 psi (about 413 MPa). The total porosity (%) is calculated as the ratio of the total intruded mercury volume to the overall volume of the first composite layer, multiplied by 100. Alternatively, the porosity may be determined by using a gas pycnometer (for example, helium gas pycnometer) in accordance with ASTM D6226 standard, where the skeletal density and bulk density of the first composite layer are measured, and the porosity is calculated as follows:

$$\text{Porosity (\%)} = [1 - (\text{bulk density} / \text{skeletal density})] \times 100.$$

In other words, the substrate layer 120 may be formed by a variety of suitable deposition methods, and may increase the surface area to realize a uniform or substantially uniform current density distribution. In addition, in a case where the substrate layer 120 is formed by a physical vapor deposition method, the substrate layer 120 may be formed to be uniform or substantially uniform and thin, which may increase the current density.

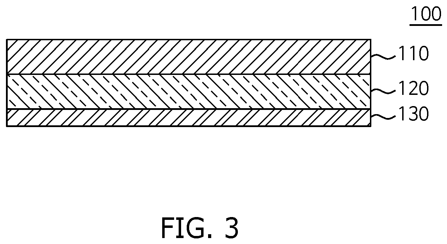

FIG. 3 illustrates a cross-sectional view showing an example of a dry electrode in which a second composite layer is formed according to some embodiments of the present disclosure.

Referring to FIG. 3, the dry electrode 100 according to some embodiments of the present disclosure may further include a second composite layer 130.

The second composite layer 130 may be disposed on a second surface of the substrate layer 120 opposite a first surface of the substrate layer 120 facing the first composite layer 110. In this case, the first composite layer 110 and the second composite layer 130 may include different active materials from each other. In more detail, the first composite layer 110 may be disposed on the first surface of the substrate layer 120, and the second composite layer 130 may be disposed on the second surface of the substrate layer 120 opposite to the first surface.

In an example, in a case where the first composite layer 110 includes a negative electrode active material, the second composite layer 130 may include a positive electrode active material. The first composite layer 110 and the second composite layer 130 are shown in FIG. 3 as having the same or substantially the same size as each other, but the present disclosure is not limited thereto. The first composite layer 110 and the second composite layer 130 may be formed in different sizes from each other, and the active material layer corresponding to the negative electrode may be formed to be larger than the active material layer corresponding to the positive electrode.

The dry electrode 100 of FIG. 3 may be a bipolar electrode in which opposite surfaces of the substrate layer 120 are coated with active materials of different polarities from each other. A secondary cell employing monopolar electrodes has junctions connected to the electrodes, and thus, the output of the secondary cell may be reduced by an electrical resistance of the junctions. In a secondary cell employing the bipolar electrode, the junction resistance of the electrodes may be minimized or reduced, because the electrodes are stacked without the junctions.

The material of the substrate layer 120 may be selected from the group including (e.g., consisting of), but is not particularly limited to, copper, aluminium, stainless steel, zinc, titanium, silver, palladium, nickel, iron, chromium, one or more suitable alloys thereof, and/or suitable combinations thereof, each of which has a high conductivity without causing a chemical change in the secondary cell. The stainless steel may be surface treated with carbon, nickel, titanium, or silver, and an aluminium-cadmium alloy may be used as the alloy.

The second composite layer 130 may be rolled together with the first composite layer 110 and the substrate layer 120, thereby being joined to the substrate layer 120. The second composite layer 130 may be dry-formed in the form of a film in which an active material and a binder are mixed, similar to that of the first composite layer 110. The active material may be a positive electrode active material or a negative electrode active material.

In a case where the second composite layer 130 is formed by rolling, the rolling may be performed in accordance with a suitable method, such as by pressing with a pressurized roller provided in a roll press or the like, or by pressing over the entire surface of the electrode with a plate press, as would be understood by those having ordinary skill in the art.

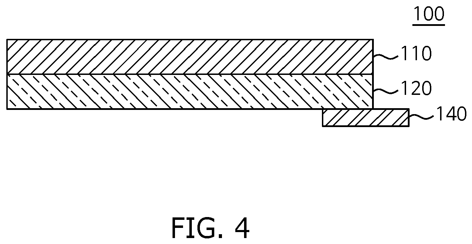

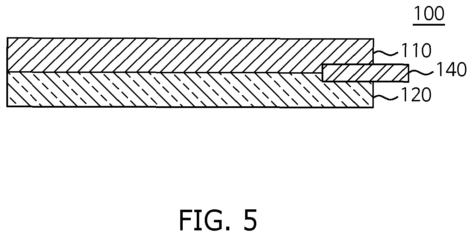

FIG. 4 illustrates a cross-sectional view showing an example in which an electrode tab is attached to a dry electrode according to some embodiments of the present disclosure. FIG. 5 illustrates a cross-sectional view showing another example in which an electrode tab is attached to a dry electrode according to some embodiments of the present disclosure.

Referring to FIGS. 4 and 5, the dry electrode 100 according to some embodiments of the present disclosure may further include an electrode tab 140.

In an embodiment, as shown in FIG. 4, the electrode tab 140 may be disposed on a second surface of the substrate layer 120 opposite to a first surface of the substrate layer 120 facing the first composite layer 110. The electrode tab 140 may be joined to (e.g., may be connected to or attached to) the second surface of the substrate layer 120 in a state where the substrate layer 120 is deposited on the first composite layer 110.

The electrode tab 140 may be a metal tab of, for example, nickel (Ni) or aluminium (Al). For example, the electrode tab 140 may be welded to the second surface of the substrate layer 120. At least a portion of the electrode tab 140 may protrude from the substrate layer 120 so as to be exposed. The portion of the electrode tab 140 protruding from the substrate layer 120 may not be in contact with the substrate layer 120.

In another embodiment, as shown in FIG. 5, in a state where the electrode tab 140 is disposed on a first surface of the first composite layer 110, the substrate layer 120 may be formed on the same surface of the first composite layer 110 by deposition. The electrode tab 140 may be joined to (e.g., may be connected to or attached to) the first surface of the first composite layer 110. Because the substrate layer 120 is deposited in a state where the electrode tab 140 is joined to (e.g., connected to or attached to) the first composite layer 110, the electrode tab 140 may be disposed between the first composite layer 110 and the substrate layer 120.

At least a portion of the electrode tab 140 may protrude between the first composite layer 110 and the substrate layer 120 so as to be exposed to the outside.

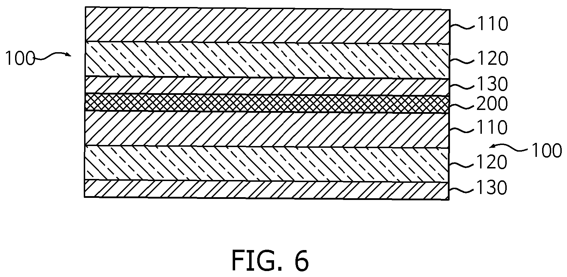

FIG. 6 illustrates a cross-sectional view showing an example of an electrode assembly according to some embodiments of the present disclosure.

Referring to FIG. 6, an electrode assembly according to some embodiments of the present disclosure may include a plurality of dry electrodes 100 and a separator 200.

The separator 200 may be disposed between the dry electrodes 100 including different active materials from each other. The separator 200 may be a physical separator 200 having the function of physically separating the electrodes from each other, and is not particularly limited as long as the separator 200 is used as any suitable separator as would be understood by those having ordinary skill in the art.

The separator may be disposed between the first composite layer 110 of one dry electrode 100 and the second composite layer 130 of another dry electrode 100.

The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one or both surfaces of the porous substrate.

The porous substrate may be a polymer film formed of any one selected polymer polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer or a (meth)acrylic polymer.

The inorganic material may include inorganic particles selected from $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and a combination thereof, but is not limited thereto.

The organic material and the inorganic material may be mixed in one coating layer, or a coating layer including an organic material and a coating layer including an inorganic material may be stacked.

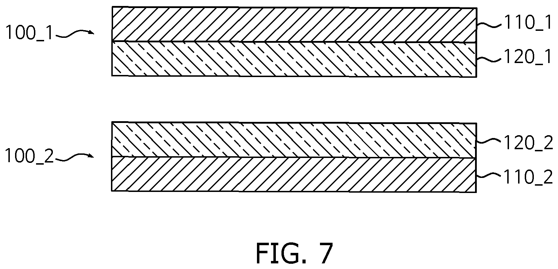

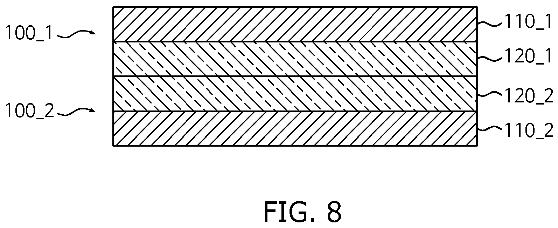

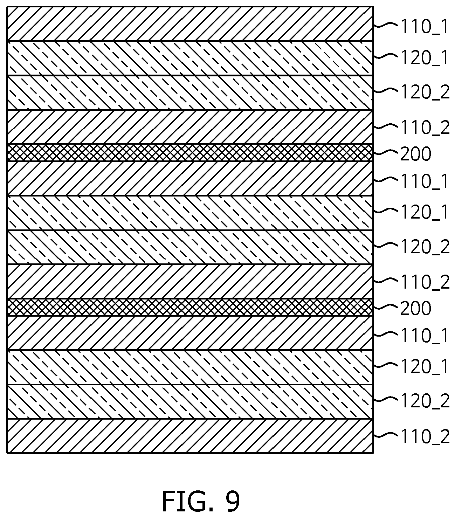

FIG. 7 illustrates cross-sections of a dry negative electrode and a dry positive electrode, respectively, according to some embodiments of the present disclosure. FIG. 8 illustrates a cross-section of a double-sided electrode formed by rolling the dry negative electrode and the dry positive electrode of FIG. 7 while in contact with each other. FIG. 9 illustrates a cross-section of an electrode assembly formed by stacking the double-sided electrodes formed in FIG. 8.

In an embodiment, as shown in FIG. 7, a first composite layer 110_1 including a negative electrode active material may be dry-formed, and a negative electrode substrate layer 120_1 may be formed on a first surface of the first composite layer 110_1 by deposition. Separately, a first composite layer 110_2 including a positive electrode active material may be dry-formed, and a positive electrode substrate layer 120_2 may be formed on a first surface of the first composite layer 110_2 by deposition.

Thereafter, the negative electrode substrate layer 120_1 and the positive electrode substrate layer 120_2 may be positioned to face each other, and then two dry electrodes 100_1 and 100_2 may be joined to (e.g., may be connected to or attached to) each other so that the negative electrode substrate layer 120_1 and the positive electrode substrate layer 120_2 contact each other. In a state where the two dry electrodes 100_1 and 100_2 are joined to each other, a double-sided electrode may be formed by rolling.

The double-sided electrode formed in this manner may have the first composite layer 110_1 including a negative electrode active material and the first composite layer 110_2 including a positive electrode active material disposed on opposite sides thereof, respectively. In other words, an integrated electrode having both a positive electrode and a negative electrode present in a single electrode may be manufactured. A plurality of integrated electrodes may be stacked with a separator 200 provided therebetween.

Because the double-sided electrode has the negative electrode substrate layer 120_1 and the positive electrode substrate layer 120_2 in contact with each other, a size of the electrode may be reduced. In addition, because the positive and negative electrodes of the electrode are integrated, the negative electrode may sufficiently cover the positive electrode. For example, an issue that may be caused when the negative electrode does not sufficiently cover the positive electrode may be prevented or substantially prevented. In other words, because it may not be desirable to design the electrode such that the size of the negative electrode is larger than the size of the positive electrode, the size of the electrode may be reduced.

In addition, the reduced size of the electrodes may allow more electrodes to be provided in a single cell, which may also improve the energy density of the cell.

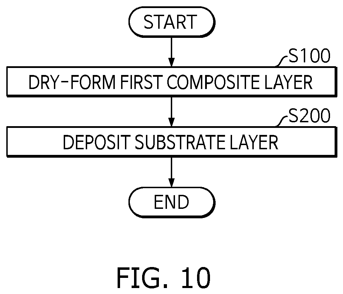

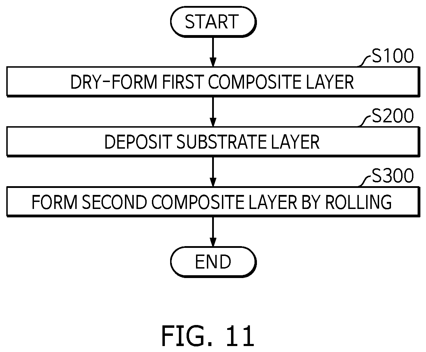

FIG. 10 illustrates a flowchart of a method of manufacturing a dry electrode according to some embodiments of the present disclosure. FIG. 11 illustrates a flowchart of a method of forming a second composite layer on the dry electrode in the method of manufacturing a dry electrode according to some embodiments of the present disclosure.

Referring to FIGS. 10 and 11, the method of manufacturing a dry electrode according to some embodiments of the present disclosure includes dry-forming a first composite layer 110 (S100) including an active material, and depositing a substrate layer 120 (S200) on at least a first surface of the first composite layer 110.

In the dry-forming of the first composite layer 110 (S100), the first composite layer 110 may be formed in the form of a film. After the depositing of the substrate layer (S200), the first composite layer 110 may have a porosity of 30% or less.

In the dry-forming of the first composite layer 110 (S100), the first composite layer 110 including an active material and a binder may be formed in the form of a film by a dry process. The active material may be a positive electrode active material or a negative electrode active material.

After the dry-forming the first composite layer 110 (S100), the depositing of the substrate layer 120 (S200) may be performed. In the depositing of the substrate layer 120 (S200), the substrate layer 120 may be deposited to a thickness of 1 $\mu$m to 2 $\mu$m.

For example, the depositing of the substrate layer 120 (S200) may be performed by placing a metal to be deposited in an electric furnace, and coating the surface of the first composite layer 110 by evaporating the metal. In this case, the form and amount of deposition may be adjusted by adjusting a current value. As an example, the thickness of the substrate layer 120 may be adjusted by operating at 50 A to 300 A and 1 m/min to 10 m/min based on a 400 mm $\times$ 50 mm furnace.

In the depositing the substrate layer 120 (S200), the substrate layer 120 may include aluminium (Al) or copper (Cu), and the substrate layer 120 may be formed on at least the first surface of the first composite layer 110 by deposition. In a case where the first composite layer 110 is formed of a negative electrode active material, the substrate layer 120 may be deposited on the first composite layer 110 by evaporating the copper (Cu) metal. In a case where the first composite layer 110 is formed of a positive electrode active material, the substrate layer 120 may be deposited on the first composite layer 110 by evaporating the aluminium (Al) metal.

In the depositing of the substrate layer 120 (S200), the deposition method may include one or more suitable methods selected from the group including (e.g., consisting of) physical vapor deposition (PVD) or chemical vapor deposition (CVD), including sputtering, electron beam (E-beam) processing, evaporation, atomic layer deposition (ALD), arc discharge, and/or thermal evaporation.

After the depositing of the substrate layer 120 (S200), a second composite layer 130 may be formed by rolling (S300), the second composite layer 130 including an active material different from that of the first composite layer 110 (e.g., see FIG. 11). The forming of the second composite layer 130 (S300) may include disposing the second composite layer

130 on a second surface of the substrate layer 120 opposite to a first surface of the substrate layer 120 facing the first composite layer 110, and rolling the first composite layer 110, the substrate layer 120, and the second composite layer 130 together so that the second composite layer 130 is joined to the substrate layer 120.

In a case where the first composite layer 110, the substrate layer 120, and the second composite layer 130 are rolled together, the rolling may be performed in accordance with any suitable method as would be understood by those having ordinary skill in the art. For example, the rolling may be performed by pressing with a pressurized roller provided in a roll press or the like, or by pressing over the entire surface of the electrode with a plate press.

For example, in the forming of the second composite layer 130 (S300), the rolling process may include applying a pressure of 10 kg/cm$^2$ to 100 kg/cm$^2$, and heating at a temperature of 100 °C to 200 °C. The heat treatment may include both heating while performing the rolling process or performing the rolling process in a state where the elements are heated prior to the rolling process.

In addition, the method of manufacturing a dry electrode according to some embodiments of the present disclosure may further include, after the depositing of the substrate layer (S200), disposing an electrode tab 140 on a side of the substrate layer 120 opposite a side of the substrate layer 120 facing the first composite layer 110. The electrode tab 140 may be joined by welding to a first surface or a second surface of the substrate layer 120 in a state where the substrate layer 120 is deposited on the first composite layer 110.

The method of manufacturing a dry electrode according to some other embodiments of the present disclosure may further include, after the dry-forming of the first composite layer (S100), disposing an electrode tab 140 on the first composite layer 110. In the depositing of the substrate layer (S200), in a state where the electrode tab 140 is disposed on the first surface of the first composite layer 110, the substrate layer may be deposited on the same first surface. The depositing of the substrate layer (S200) may be performed by depositing the substrate layer 120 on the first surface of the first composite layer 110 to which the electrode tab 140 is attached in a state where the electrode tab 140 is joined to (e.g., connected to or attached to) the first composite layer 110.

The dry electrode according to some embodiments of the present invention may not have poor adhesion between the composite layer and the substrate layer, like that in a comparative dry process in which the adhesion surface area is increased by the substrate layer 120 deposited on the first surface of the first composite layer 110. In addition, an electrical conductivity may be improved because voids formed in the first composite layer 110 may be filled in the vapor deposition process of the substrate layer 120.

Although the present disclosure has been described with reference to embodiments and drawings illustrating aspects thereof, the present disclosure is not limited thereto. Various modifications and variations can be made by a person skilled in the art to which the present disclosure belongs within the scope of the technical idea of the present disclosure and the claims and their equivalents, below.

## Claims

1.  A dry electrode (100) comprising:

    a first composite layer (110) comprising an active material; and
    a substrate layer (120) on at least a first surface of the first composite layer (110).

2.  The dry electrode (100) as claimed in claim 1, wherein the substrate layer (120) has a thickness of 1 $\mu$m to 2 $\mu$m.

3.  The dry electrode (100) as claimed in claim 1 or claim 2, wherein the substrate layer (120) comprises aluminium or copper.

4.  The dry electrode (100) as claimed in any one of claims 1 to 3, further comprising a second composite layer (130) on a second surface of the substrate layer (120) opposite to a first surface of the substrate layer (120) facing the first composite layer (110).

5.  The dry electrode (100) as claimed in claim 4, wherein the first composite layer (110) and the second composite layer (130) comprise different active materials from each other.

6.  The dry electrode (100) as claimed in claim 4 or claim 5, wherein the second composite layer (130) is joined to the substrate layer (120) by being rolled together with the first composite layer (110) and the substrate layer (120).

7.  The dry electrode (100) as claimed in any one of claims 1 to 6, wherein the substrate layer (120) comprises a material deposited by at least one of physical vapor deposition (PVD), chemical vapor deposition (CVD), sputtering, electron beam (E-beam) processing, evaporation, atomic layer deposition (ALD), arc discharge, or thermal evaporation.

8. The dry electrode (100) as claimed in any one of claims 1 to 7, wherein the first composite layer (110) comprises voids, and

   wherein some of the voids are filled with the substrate layer (120).

9. The dry electrode (100) as claimed in claim 8, wherein the first composite layer (110) has a porosity of 30% or less.

10. The dry electrode (100) as claimed in any one of claims 1 to 9, further comprising an electrode tab (140),

    wherein the electrode tab (140) is on a second surface of the substrate layer (120) opposite to a first surface of the substrate layer (120) facing the first composite layer (110).

11. The dry electrode (100) as claimed in any one of claims 1 to 10, further comprising an electrode tab (140),

    wherein the electrode tab (140) is on the first composite layer (110), and
    wherein the substrate layer (120) covers the electrode tab (140) on the first composite layer (110).

12. A method of manufacturing a dry electrode (100), the method comprising:

    dry-forming a first composite layer (110) comprising an active material; and
    depositing a substrate layer (120) on at least a first surface of the first composite layer (110).

13. The method as claimed in claim 12, wherein after the depositing of the substrate layer (120), the method further comprises:
    forming a second composite layer (130) on the substrate layer (120), the second composite layer (130) comprising an active material different from that of the first composite layer (110), optionally wherein:
    the forming of the second composite layer (130) comprises:

       disposing the second composite layer (130) on a second surface of the substrate layer (120) opposite to a first surface of the substrate layer (120) facing the first composite layer (110); and
       rolling the first composite layer (110), the substrate layer (120), and the second composite layer (130) together to join the second composite layer (130) to the substrate layer (120).

14. The method as claimed in claim 12 or claim 13, wherein after the depositing of the substrate layer (120), the method further comprises disposing an electrode tab (140) on a second surface of the substrate layer (120) opposite a first surface of the substrate layer (120) facing the first composite layer (110).

15. The method as claimed in claim 12 or claim 13, wherein after the dry-forming of the first composite layer (110), the method further comprises disposing an electrode tab (140) on the first surface of the first composite layer (110), and wherein the depositing of the substrate layer (120) comprises depositing the substrate layer (120) on the first surface of the first composite layer (110) to cover the electrode tab (140) on the first surface of the first composite layer (110).

100

110

120

FIG. 1

FIG. 2

100

110

120

130

FIG. 3

FIG. 4

100

110

140

120

FIG. 5

FIG. 6

FIG. 7

FIG. 8

110_1

120_1

120_2

110_2

200

110_1

120_1

120_2

110_2

200

110_1

120_1

120_2

110_2

FIG. 9

START

⌐S100
DRY-FORM FIRST COMPOSITE LAYER

⌐S200
DEPOSIT SUBSTRATE LAYER

END

FIG. 10

START

S100

DRY-FORM FIRST COMPOSITE LAYER

S200

DEPOSIT SUBSTRATE LAYER

S300

FORM SECOND COMPOSITE LAYER BY ROLLING

END

FIG. 11

Europäisches
Patentamt
European
Patent Office
Office européen
des brevets

# EUROPEAN SEARCH REPORT

**Application Number**

EP 25 18 9974

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/187637 A1 (KWON ILKYONG [KR] ET AL) 15 June 2023 (2023-06-15) <br> * paragraphs [0084] - [0086]; figure 5C * <br> * paragraph [0156] * <br> * paragraph [0087]; figure 5D * <br> * paragraphs [0109], [0131] * <br> * paragraph [0059] * <br> * paragraphs [0043], [0086] * <br> * paragraphs [0092], [0093] * <br> * paragraphs [0109], [0111], [0112] * <br> * paragraphs [0038], [0039] * <br> ----- | 1-15 | INV. <br> H01M4/04 <br> H01M4/13 <br> H01M4/139 <br> H01M4/66 <br> H01M4/02 |

**TECHNICAL FIELDS SEARCHED (IPC)**

H01M

The present search report has been drawn up for all claims

| Place of search | Date of completion of the search | Examiner |
|---|---|---|
| The Hague | 5 August 2025 | Mohsin, Ijaz |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 18 9974

This annex lists the patent family members relating to the patent documents cited in the above-mentioned European search report.
The members are as contained in the European Patent Office EDP file on
The European Patent Office is in no way liable for these particulars which are merely given for the purpose of information.

05-08-2025

| Patent document cited in search report | Publication date | Patent family member(s) | | Publication date |
|---|---|---|---|---|
| US 2023187637 A1 | 15-06-2023 | CN | 116264267 A | 16-06-2023 |
| | | EP | 4199136 A1 | 21-06-2023 |
| | | JP | 7536069 B2 | 19-08-2024 |
| | | JP | 2023088317 A | 26-06-2023 |
| | | KR | 20230090008 A | 21-06-2023 |
| | | US | 2023187637 A1 | 15-06-2023 |

EPO FORM P0459

For more details about this annex : see Official Journal of the European Patent Office, No. 12/82